# EUROPEAN PATENT SPECIFICATION

(11) **EP 1 218 227 B1**
(45) Date of publication and mention of the grant of the patent: **14.12.2005**
(21) Application number: 00972425.3
(22) Date of filing: 28.09.2000
(51) Int. Cl.: B60R 25/00, G07C 9/00

(54) **IMPROVED SECURITY SYSTEM**
SICHERHEITSSYSTEM
SYSTEME DE SECURITE AMELIORE

(30) Priority: 28.09.1999 AU PQ312399
(43) Date of publication of application: 03.07.2002
(73) Proprietor: Australian Arrow Pty. Ltd., Carrum Downs, VIC 3201 (AU)
(72) Inventor: JANKOWSKI, David, Paul, Glen Waverley, Victoria 3150 (AU); KERRY, Leonard, John, Carrum Downs, Victoria 3201 (AU); JAMES, Campbell, Richard, Mt Eliza, Victoria 3930 (AU)
(74) Representative: Collingwood, Anthony Robert
(86) International application number: PCT/AU2000/001186
(87) International publication number: WO 2001/023227

(56) References cited:
- EP-A2- 0 926 021
- DE-C1- 19 637 387
- FR-A1- 2 717 327
- US-A- 4 738 334
- US-A- 5 790 014
- US-A- 5 889 471

## Description

### Field of the Invention

This invention relates to an improved security system and relates particularly to a security system which permits authorised keyless actuation of a locking system, a control system, or the like, to permit entry through or past a closure, such as a door, into a building, secure area or motor vehicle, or actuation of control circuits permitting operation of a motor vehicle or the like.

### Background of the Invention

The invention will be described with particular reference to its application to a motor vehicle, but it will be understood that the principles of the invention apply to a wide range of applications.

Many forms of security systems have been proposed for motor vehicles which enable an authorised person to obtain access to the vehicle without the use of a key to physically unlock the vehicle doors. Such known systems include the provision of radio transmitter devices which, on actuation by a push button, cause the vehicle to unlock. These systems require the relatively bulky radio transmitter to be carried by the authorised person. Other systems, commonly known as "passive access" systems, enable an electronic identification device carried by an authorised person to actuate the locking mechanism of a locked vehicle. With such a system, the vehicle transmits a message to the electronic identification device when the person touches the vehicle door handle or triggers a short range proximity sensor in the vehicle. Typically, the message contains vehicle identification information so that the electronic identification device can determine whether or not to respond. The vehicle transmission may also contain a random number. If the vehicle identification code is correct, the random number is manipulated by the electronic identification device according to an algorithm. The result of the manipulation is then transmitted to the vehicle which compares the response to an expected response. If the transmitted response and expected response match, the vehicle is unlocked.

The system may also include vehicle operation authentication whereby a similar process is repeated when the vehicle operator attempts to start the vehicle.

In this instance, it is desirable for the system to be able to determine whether or not the identification device is inside the vehicle. Therefore, typically, the vehicle's signal transmission is controlled so that it is unlikely that the identification device could detect the signal from outside the vehicle.

The known passive access system described above provides a remote keyless entry system which allows authorised entry to and operation of a vehicle by an authorised person, carrying the electronic identification device, simply walking up to the vehicle, opening the door and driving off. However, the system is vulnerable to an unauthorised person obtaining access to the vehicle. An attack on the security takes advantage of the contactless operation of the electronic identification device and the ability to activate that device remotely without the knowledge of the authorised owner. The attack works as follows:
The authorised owner of the vehicle locks the vehicle and walks away, beyond the normal range of communication between the electronic identification device and the vehicle communication system. A person carrying a transceiver follows the operator. Another person carrying a second transceiver stays with the vehicle. The person near the vehicle triggers the vehicle to transmit its identification message, such as by touching the door handle or triggering a proximity sensor in the vehicle. The transceiver carried by that person relays the vehicle's transmission to the transceiver of the second person near the authorised operator. The electronic identification device carried by the authorised operator receives the relayed vehicle transmission and responds. This response is received by the transceiver carried by the person near the owner and the response is relayed back to the transceiver carried by the person near the vehicle which transmits the identification device response and the vehicle, receiving a valid response, unlocks the vehicle.

While proposals have been made to resolve the potential security problem, such proposals are relatively expensive and difficult to implement. One such proposal requires a further parameter to be determined, such as the distance between the vehicle and the electronic identification device, and the system is arranged so that the vehicle will only unlock if that distance is no greater than a predetermined maximum. While this additional proximity criteria is effective in most circumstances, it is a technically difficult and relatively expensive solution.

It is therefore desirable to provide an improved passive access security system which obviates the difficulties of the known system.

It is also desirable to provide an improved passive access security system which is relatively simple and economic to implement.

It is also desirable to provide an improved passive access security system which is robust and immune to attack using easily available, portable equipment such as transceivers.

### Summary of the Invention

In accordance with one aspect of the invention there is provided a security system having transponder means adapted to be actuated to generate and transmit an electromagnetic trigger signal, and a portable electronic device adapted to receive and respond to said trigger signal by transmitting a response signal, the receipt and authentication of which by the transponder means gives rise to a predetermined event, said response signal comprising one or more radio frequency signals of a frequency and duration determined by an algorithm together with a unique stored number with reference to a random number contained in the trigger signal.

In one embodiment of the security system of the invention incorporated into a motor vehicle, the transponder means is adapted to be actuated either by a proximity sensor or by a person touching the vehicle, lifting a door handle or otherwise signalling the transponder means. When an authenticated response signal is received by the transponder means, it causes the vehicle door or doors to become unlocked, in a known manner.

The present invention seeks to avoid unauthorised defeat by varying the communications between the transponder means and the portable electronic device. With present passive access systems as described above, the communication transmissions are of fixed frequencies and in relatively narrow bandwidths. With the present invention, the communication signals can be throughout a relatively broad spectrum of frequencies, such as from 200 MHz to 400 MHz, or even broader. With such a possible bandwidth, it is virtually impossible for a person with a transceiver or similar device to monitor, detect and retransmit the response signal. A person attempting to defeat the system would need to relay the entire 200 MHz band to an accomplice, but the wide bandwidth coupled with the low level of the target signal make implementation extremely unlikely.

In one form of the invention, the use of an algorithm with a unique stored number to manipulate the random number contained in the trigger signal means that both the frequency of the response signal and the number and length of transmitted pulse trains can be varied. The transponder means is able to tune its receiver to the frequencies of the expected response signal.

In order that the invention is more readily understood, one embodiment will now be described with reference to the accompanying drawings.

### Description of the drawings

Figure 1 is a schematic view of a vehicle incorporating a security system in accordance with the invention, and
Figure 2 is a block diagram schematically illustrating the features of the invention.

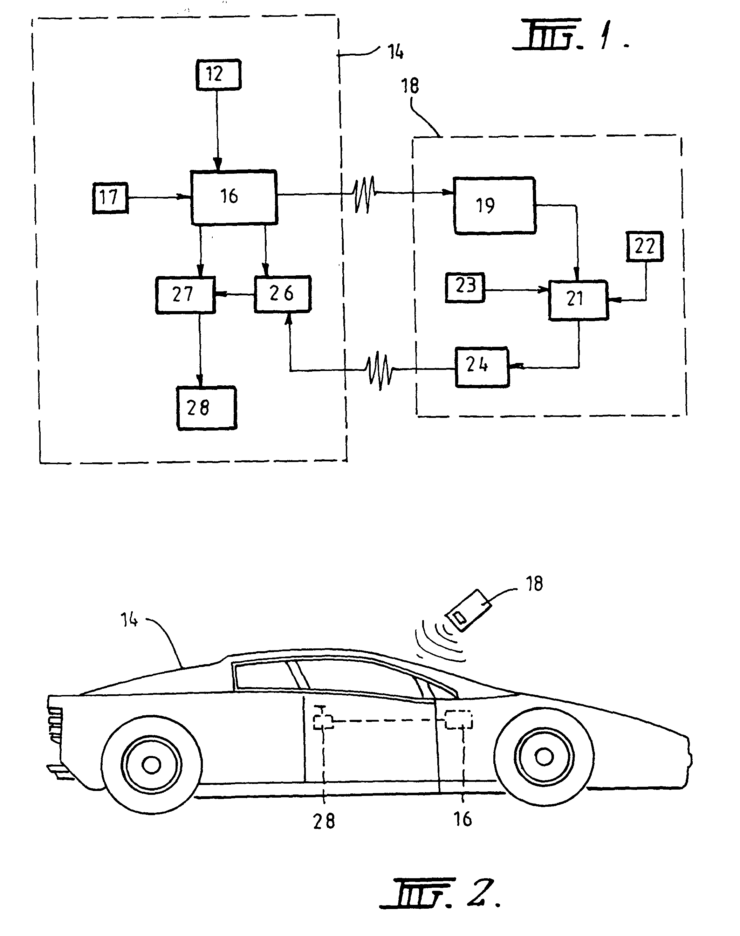

### Description of the Preferred Embodiment

Referring to the drawings, in the embodiment illustrated, a proximity sensor 12 is located in a vehicle 14 and senses, in a known manner, the presence of a person adjacent the vehicle 14. The proximity sensor 12 may sense a person touching a vehicle door handle, or sense an attempt to actuate a door handle which activates a switch. Alternatively, the sensor 12 may comprise a short range proximity sensor located in the vehicle using, for example, capacitive monitoring to sense the presence of a person adjacent the vehicle. When the proximity sensor 12 is activated, it causes a vehicle transponder 16 in the vehicle 14 to transmit a radio frequency trigger signal at a predetermined, fixed carrier frequency. This trigger signal includes a random number generated by random number generator 17 associated with the transponder 16. The trigger signal also incorporates coded vehicle identification information that uniquely identifies the vehicle 14. The trigger signal may be transmitted a predetermined number of times, or over a predetermined period, following activation of the proximity sensor. Alternatively, one trigger signal may be transmitted for each proximity sensor activation.

The random number generated by the generator 17 is used to establish one or more frequencies to which the transponder receiver 26 in the vehicle is to be tuned to receive a response to the transmitted trigger signal. In this embodiment, the RF frequencies may vary between 200 MHz and 400MHz, although it will be appreciated that a broader or different bandwidth may be used.

At least one electronic identification device 18 is associated with the vehicle transponder 16. The device 18 has receiver and decoder circuitry 19 to receive and decode a received signal, a processor 21 and a transmitter 24. A unique identification number together with vehicle identification information is held in a store 23, and the processor is programmed to conduct calculations in accordance with an algorithm 22.

If the person sensed by the proximity sensor 12 is carrying an electronic identification device 18, the device receives the trigger signal in the receiver and decoder circuitry 19 and determines if the transmitted coded vehicle identification information matches the stored vehicle information in the device. If the received and stored information matches, the random number included with the trigger signal is manipulated in processor 21 using an algorithm 22 and the stored unique number in the store 23. The processor thereby generates a resulting response signal that comprises one or more bursts of RF energy of given duration and at one or more frequencies, the three variables (number of pulses generated, their duration and the RF frequencies of the pulses) being determined by the algorithm working with the unique stored number in conjunction with the random number transmitted from the vehicle 14. The response signal is transmitted by the transmitter 24 and received by a receiver 26 associated with the transponder 16 in the vehicle 14.

As indicated above, in generating and transmitting the trigger signal, which carries the random number, the receiver 26 in the vehicle is tuned to the frequencies of the expected response signal in accordance with the transmitted random number. On receipt of a response signal of the appropriate frequency or frequencies, a comparator 27 compares the response signal with the expected signal, it being understood that the transponder stores the unique identification number of the device and is able to use the same algorithm to calculate the expected response. If the received response signal matches the expected response, a signal is sent to a door lock actuator 28 to unlock the vehicle door(s).

If vehicle operation authentication is also required of the system, the information exchange described above is repeated when the operator attempts to start the vehicle. In this instance, it is desirable for the system to determine if the identification device 18 is inside the vehicle 14. Accordingly, the power of the trigger signal transmitted by the transponder for this function is controlled so that it is unlikely that the identification device 18 could detect the signal from outside the vehicle. This ensures that the vehicle cannot be operated unless the identification device is within the vehicle. If desired, the system may be designed such that the identification device must be mounted in an appropriate receptacle in the vehicle before the vehicle is able to be started.

It will be appreciated that the security system of the described embodiment is more secure than the previous systems of a similar type as described herein by reason of the use of a variable signal frequency within a wide bandwidth for the response signal. Further, by using an algorithm together with an unique identification number to manipulate the transmitted random number and generate a response signal having at least three variables, vis, the number of pulses, the duration of the pulses and the RF frequencies of the individual pulses, it will be very difficult to attack the system by the use of normal, portable transceivers.

It will be appreciated that the response signal may also include other variables, such as a polling identification number, the polling of which is determined by the random number.

A security system of the invention may be made substantially more immune to interfering external RF sources than currently known systems by the use of the variable frequency of the response signal. If access to a vehicle is blocked because of an interfering RF signal source, re-activation of the trigger signal will generally give rise to a response signal having a frequency that is not interfered with by the RF source. However, some redundancy should be made in the identification device's response coding to allow for masking which may occur due to interfering external signals at spot frequencies.

It will be appreciated that the principals of this invention may be used in a large number of different applications, such as security access associated with buildings, including external doors, internal doors, lifts, maintenance areas and the like. The principals may also be used to provide authorisation for activities other than access. Thus, the system may be designed to permit only authorised use of equipment

## Claims

1. A security system having transponder means adapted to be actuated to generate and transmit an electromagnetic trigger signal, and a portable electronic device adapted to receive and respond to said trigger signal by transmitting a response signal, the receipt and authentication of which by the transponder means gives rise to a predetermined event, said response signal comprising one or more radio frequency signals of a frequency and duration determined by an algorithm together with a unique number stored in the device and with reference to a random number contained in the trigger signal.

2. A security system according to claim 1 wherein said response signal contains three variables comprising the number of pluses in the RF signal, the frequency of the pulses and the pulse duration.

3. A security system according to claim 1 or claim 2 wherein the transponder means includes a receiver which is tuned to the expected frequency of the response signal in accordance with the random number contained in the trigger signal.

4. A security system according to any one of claims 1 to 3 wherein the transponder means is actuated by a proximity sensor.

5. A security system according to any one of claims 1 to 3 wherein the transponder means is actuated by a switch.

6. A security system according to any one of the preceding claims wherein the predetermined event is the actuation of a door lock or the enabling of a control system.

7. A security system according to any one of the preceding claims wherein a random number generator is associated with the transponder means and generates a new random number upon each actuation of the transponder means.

8. A security system according to any one of the preceding claims wherein the transponder means transmits the trigger signal for a predetermined period following actuation or until reception of an authenticated response signal.

9. A security system according to any one of the preceding claims wherein said trigger signal incorporates coded identification information that uniquely identifies the transponder

10. A security system according to claim 9 wherein the device stores identification information and on reception of a trigger signal, determines if the transmitted coded identification information match the stored information and generates a response signal only if the information matches.

11. A security system according to any one of the preceding claims wherein the frequency of the response signal varies with each transmission within the range 200 MHz and 400 MHz.

12. A security system according to any one of the preceding claims wherein the frequency of individual pulses of the response signal vary within a predetermined range.

13. A security system according to any one of the preceding claims wherein said transponder means is mounted in a motor vehicle and is actuated by a proximity sensor or a switch associated with a vehicle door handle.

14. A security system according to claim 13 wherein the or a second transponder means is associated with vehicle electrical circuits which are enabled on receipt of an authenticated response signal following transmission of a coded trigger signal initiated by vehicle starting procedures.

15. A security system according to claim 14 wherein the signal strength of the coded trigger signal transmitted on actuation of vehicle starting procedures is such that the signal is unable to be detected by the device outside the vehicle.

16. A security system according to any one of claims 13 to 15 wherein the vehicle includes a receptacle with which the device must be engaged before vehicle electrical systems are able to be enabled.

17. A security system substantially as hereinbefore described with reference to the accompanying drawings.

## Patentansprüche

1. Sicherheitssystem mit Transpondermitteln, die ausgebildet sind, um betätigt zu werden für die Erzeugung und Übertragung eines elektromagnetischen Triggersignals, und einer tragbaren elektronischen Vorrichtung, die ausgebildet ist für das Empfangen und Antworten auf das Triggersignal durch Übertragen eines Antwortsignals, wobei der Empfang und die Beglaubigung von diesem durch die Transpondermittel ein vorbestimmtes Ereignis verursachen, welches Antwortsignal ein oder mehr Hochfrequenzsignale mit einer Frequenz und einer Dauer aufweist, die bestimmt sind durch einen Algorithmus zusammen mit einer eindeutigen Zahl, die in der Vorrichtung gespeichert sind, und mit Bezug auf eine in dem Triggersignal enthaltene zufällige Zahl.

2. Sicherheitssystem nach Anspruch 1, bei dem das Antwortsignal drei Variablen enthält, die die Anzahl von Impulsen in dem Hochfrequenzsignal, die Frequenz der Impulse und die Impulsdauer aufweisen.

3. Sicherheitssystem nach Anspruch 1 oder Anspruch 2, bei dem die Transpondermittel einen Empfänger enthalten, der auf die erwartete Frequenz des Antwortsignals in Übereinstimmung mit der in dem Triggersignal enthaltenen zufälligen Zahl eingestellt ist.

4. Sicherheitssystem nach einem der Ansprüche 1 bis 3, bei dem die Transpondermittel durch einen Annäherungssensor betätigt werden.

5. Sicherheitssystem nach einem der Ansprüche 1 bis 3, bei dem die Transpondermittel durch einen Schalter betätigt werden.

6. Sicherheitssystem nach einem der vorhergehenden Ansprüche, bei dem das vorbestimmte Ereignis die Betätigung einer Türverriegelung oder die Freigabe eines Steuersystems ist.

7. Sicherheitssystem nach einem der vorhergehenden Ansprüche, bei dem ein Zufallszahlgenerator mit den Transpondermitteln assoziiert ist und eine neue zufällige Zahl bei jeder Betätigung der Transpondermittel erzeugt.

8. Sicherheitssystem nach einem der vorhergehenden Ansprüche, bei dem die Transpondermittel das Triggersignal während einer vorbestimmten Periode folgend der Betätigung oder bis zum Empfang eines beglaubigten Antwortsignals übertragen.

9. Sicherheitssystem nach einem der vorhergehenden Ansprüche, bei dem das Triggersignal codierte Identifikationsinformationen, die die Transpondermittel eindeutig identifizieren, enthält.

10. Sicherheitssystem nach Anspruch 9, bei dem die Vorrichtung Identifikationsinformationen speichert und bei Empfang eines Triggersignals bestimmt, ob die übertragenen codierten Identifikationsinformationen den gespeicherten Informationen angepasst sind, und ein Antwortsignal nur dann erzeugt, wenn die Informationen angepasst sind.

11. Sicherheitssystem nach einem der vorhergehenden Ansprüche, bei dem die Frequenz des Antwortsignals mit jeder Übertragung innerhalb des Bereichs von 200 MHz und 400 MHz variiert.

12. Sicherheitssystem nach einem der vorhergehenden Ansprüche, bei dem die Frequenz von individuellen Impulsen des Antwortsignals innerhalb eines vorbestimmten Bereichs variiert.

13. Sicherheitssystem nach einem der vorhergehenden Ansprüche, bei dem die Transpondermittel in einem Motorfahrzeug befestigt sind und durch einen Annäherungssensor oder einen mit einem Fahrzeugtür-Handgriff assoziierten Schalter betätigt werden.

14. Sicherheitssystem nach Anspruch 13, bei dem die oder zweite Transpondermittel mit elektrischen Schaltungen des Fahrzeugs assoziiert sind, die bei Empfang eines beglaubigten Antwortsignals folgend der Übertragung eines durch Fahrzeugstartvorgänge initiierten codierten Triggersignals freigegeben werden.

15. Sicherheitssystem nach Anspruch 14, bei dem die Signalstärke des bei Betätigung von Fahrzeugstartvorgängen übertragenen codierten Triggersignals derart ist, dass das Signal nicht in der Lage ist, durch die Vorrichtung außerhalb des Fahrzeugs erfasst zu werden.

16. Sicherheitssystem nach einem der Ansprüche 13 bis 15, bei dem das Fahrzeug eine Aufnahmevorrichtung enthält, mit der die Vorrichtung in Eingriff treten muss, bevor elektrische Systeme des Fahrzeugs freigebbar sind.

17. Sicherheitssystem, im Wesentlichen wie vorstehend mit Bezug auf die begleitenden Zeichnungen beschrieben.

## Revendications

1. Système de sécurité ayant un moyen de transpondeur adapté pour être actionné pour générer et transmettre un signal de déclenchement électromagnétique, et un dispositif électronique portable adapté pour recevoir et répondre audit signal de déclenchement en transmettant un signal de réponse, dont la réception et l'authentification par le moyen de transpondeur donnent lieu à un événement prédéterminé, ledit signal de réponse comprenant un ou plusieurs signaux radio fréquence d'une fréquence et d'une durée déterminée par un algorithme ainsi qu'un nombre unique stocké dans le dispositif et en référence à un nombre aléatoire contenu dans le signal de déclenchement.

2. Système de sécurité selon la revendication 1 dans lequel ledit signal de réponse contient trois variables contenant le nombre d'impulsions dans le signal RF, la fréquence des impulsions et la durée d'impulsion.

3. Système de sécurité selon la revendication 1 ou la revendication 2 dans lequel le moyen de transpondeur comprend un récepteur qui est accordé à la fréquence attendue du signal de réponse selon le nombre aléatoire contenu dans le signal de déclenchement.

4. Système de sécurité selon l'une quelconque des revendications 1 à 3 dans lequel le moyen de transpondeur est actionné par un capteur de proximité.

5. Système de sécurité selon l'une quelconque des revendications 1 à 3 dans lequel le moyen de transpondeur est actionné par un commutateur.

6. Système de sécurité selon l'une quelconque des revendications précédentes dans lequel l'événement prédéterminé est l'actionnement d'un verrou de porte ou la validation d'un système de commande.

7. Système de sécurité selon l'une quelconque des revendications précédentes, dans lequel un générateur de nombre aléatoire est associé au moyen de transpondeur et génère un nouveau nombre aléatoire lors de chaque actionnement du moyen de transpondeur.

8. Système de sécurité selon l'une quelconque des revendications précédentes, dans lequel le moyen de transpondeur transmet le signal de déclenchement pendant une période prédéterminée après l'actionnement et jusqu'à la réception d'un signal de réponse authentifié.

9. Système de sécurité selon l'une quelconque des revendications précédentes, dans lequel ledit signal de déclenchement incorpore des informations d'identification codées qui identifient uniquement le transpondeur.

10. Système de sécurité selon la revendication 9 dans lequel le dispositif stocke des informations d'identification et lors de la réception d'un signal de déclenchement, détermine si les informations d'identification codées transmises correspondent aux informations stockées et génère un signal de réponse seulement si les informations correspondent.

11. Système de sécurité selon l'une quelconque des revendications précédentes dans lequel la fréquence du signal de réponse varie avec chaque transmission dans la plage de 200 MHz et 400 MHz.

12. Système de sécurité selon l'une quelconque des revendications précédentes dans lequel la fréquence des impulsions individuelles du signal de réponse varie dans une plage prédéterminée.

13. Système de sécurité selon l'une quelconque des revendications précédentes dans lequel ledit moyen de transpondeur est monté dans un véhicule à moteur et est actionné par un capteur de proximité ou un commutateur associé à une poignée de porte de véhicule.

14. Système de sécurité selon la revendication 13 dans lequel le ou un second moyen de transpondeur est associé aux circuits électriques de véhicule qui sont validés lors de la réception d'un signal de réponse authentifié suivant la transmission d'un signal de déclenchement codé initié par des procédures de démarrage de véhicule.

15. Système de sécurité selon la revendication 14 dans lequel la puissance de signal du signal de déclenchement codé transmis lors de l'actionnement des procédures de démarrage de véhicule est telle que le signal est incapable d'être détecté par le dispositif en dehors du véhicule.

16. Système de sécurité selon l'une quelconque des revendications 13 à 15 dans lequel le véhicule comprend un réceptacle avec lequel le dispositif doit être en prise avant que des systèmes électriques de véhicule soient capables d'être validés.

17. Système de sécurité substantiellement comme cela est décrit ci-après en référence aux dessins d'accompagnement.
